# EUROPEAN PATENT SPECIFICATION

(11) **EP 1 380 760 B1**
(45) Date of publication and mention of the grant of the patent: **02.11.2006**
(21) Application number: 03255122.8
(22) Date of filing: 02.07.1997
(51) Int. Cl.: F16B 19/08

(54) **Self piercing rivet**
Stanzniet
Rivet autoperforant

(30) Priority: 04.07.1996 GB 9614001
(43) Date of publication of application: 14.01.2004
(62) Divisional of application: 97929410.5
(73) Proprietor: TEXTRON FASTENING SYSTEMS LIMITED, Welwyn Garden City, Hertfordshire AL7 1EZ (GB)
(72) Inventor: Denham, Keith, Hertfordshire AL7 1SR (GB)
(74) Representative: Mackenzie, Andrew Bryan

(56) References cited:
- EP-A- 0 678 679
- WO-A-93/10925
- GB-A- 1 378 504

## Description

### Field of the Invention

The present invention relates to self-piercing riveting as described in WO94/14554 (HENROB). It is particularly, but not exclusively, applicable to a method and apparatus for joining workpieces using rivets which have a reduced strength difference between the rivet and the materials being joined, and is specifically applicable to the use of rivets of the same composition as the workpieces.

### Background to the Invention

Self-piercing is a method of riveting in which no aperture is preformed in any of the workpieces to be riveted together, the rivet itself penetrating at least the nearest workpiece component. Usually it is arranged that the rivet does not penetrate the most remote workpiece, so that the resulting riveted joint is inherently sealed against the passage of gas or liquids.

Self-piercing riveting has been developed as an alternative to spot welding and as such offers certain advantages. A number of such self-piercing riveting systems are commercially available for example under the Trade Marks FASTRIV and HENROB. Such systems are described in the patent literature, for example in WO93/10925 (HENROB), WO94/14554 (HENROB) and US4,615,475 (NEITEK). This is the closest prior art known to the Applicant and the reader is referred to these documents for a general description of this method and its advantages over spot welding.

These prior art systems share certain common features. First, they utilise a rivet which has a preformed head, and this head has to be accommodated within the die of the placing apparatus.

Secondly, existing methods do not give consistently reliable results unless the rivets are substantially stronger than the component to be joined. Importantly, since this method is often used with relatively hard aluminium alloy workpieces, there is a requirement to use rivets which are also of aluminium alloy. This would avoid any tendency towards chemical or galvanic corrosion or the like and would simplify the recovery of the aluminium alloy material for recycling. However, this requirement cannot currently be satisfied, since there is no sufficiently stronger aluminium alloy available for the rivet.

EP-A-0678679 discloses a rivet which in one embodiment may be used as a self-piercing rivet. In this embodiment it has a square edged rivet profile. In another embodiment, a tapered rivet is disclosed for use in pre-formed holes. The taper acts to blunt the edges of the rivet and this rivet also has pockets in its head at one end for receiving deformed workpiece material and a grooved feature to allow deformed workpiece material to lock the rivet in place.

GB-A-1378504 discloses riveting apparatus in which the rivet passes completely through the workpiece, an enlarged head being formed outside each face of the workpiece, the sides of the rivet being constrained radially where the rivet enters the workpiece.

It is the object of the present invention to overcome or mitigate one or more of the disadvantages outlined above.

### Summary of the Invention

According to the present invention, there is provided a self-piercing rivet as claimed in claim 1.

Preferably the outer face of the rivet is continuously cylindrical in design.

Preferably the rivet shank is substantially straight-sided, the sides of the shank being substantially parallel along substantially the entire length of the rivet.

Preferably the shaft of the rivet incorporates a groove.

Preferably the groove comprises a substantially circumferential channel.

Preferably the groove is positioned such that material from the workpiece nearest the end of the rivet is extruded into the groove during insertion of the rivet into the workpiece.

Preferably one of the bores is internally threaded.

Preferably the shaft of the rivet is axially polygonal in cross-section.

Preferably the rivet shank is designed as a continuous tube.

In a further aspect of the present invention, there is provided a riveted joint between at least two workpieces formed by a self-piercing rivet as claimed herein.

Preferably the upper piece(s) of the workpieces to be joined are pierced by a self-piercing rivet as defined herein and the bottom or lower most-in-use workpiece receives the piercing region of the rivet and wherein the piercing region is splayed radially outwards.

Preferably the upper component(s) are pierced by such a self piercing rivet, said rivet incorporating a piercing region at the end of the rivet shank, and the bottom component receives the piercing region in widened form, wherein the piercing region is radially widened within the bottom component to form a riveted joint.

### Brief Description of the Drawings

Aspects of the present invention will now be more particularly described by way of example only and with reference to the accompanying drawings in which:-
Figures 1 to 5 are sectional side views illustrating diagrammatically the sequential steps in a method of self-piercing riveting;
Figures 6 to 9 are sectional side views of the sequential steps in another method of self-piercing riveting;
Figures 10 and 11 are sectional side views showing the additional step of forming a rivet by wire cropping and introducing the rivet thus formed into a die;
Figures 12 and 13 are sectional views illustrating the initial sequential steps of a method of self-piercing riveting using a headed rivet;
Figure 14 illustrates a side cross-section through a self-piercing rivet according to the invention;
Figures 15 and 16 illustrate side cross-sections through other types of self-piercing rivets.
Figures 17 to 20 are sectional side views of the sequential steps in a method of self-piercing riveting.

### Description of the Preferred Embodiment

The present embodiments will now be described by way of example only.

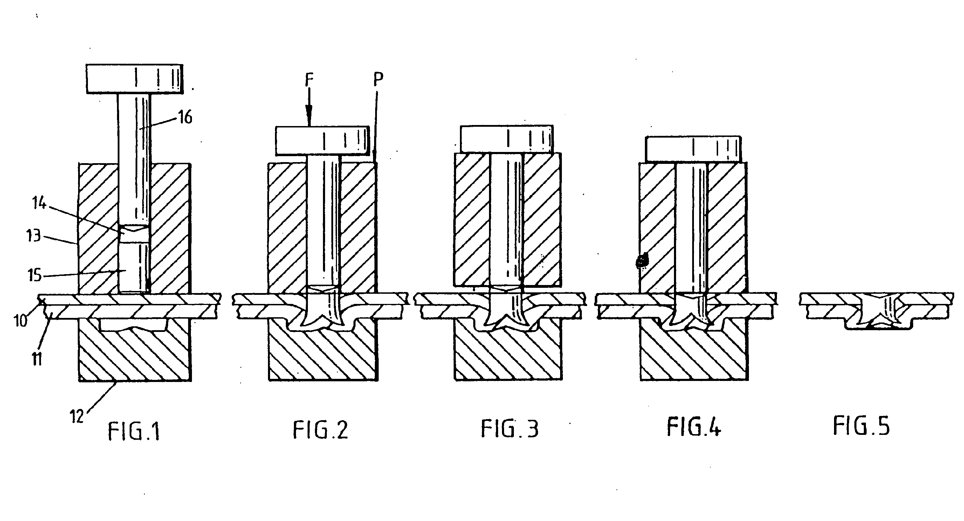

Figures 1 to 5 illustrate the sequential steps in carrying out a self-piercing riveting method. The panels or components 10, 11 to be joined together are supported between an anvil 12 and a die 13. The die incorporates a straight-sided channel 14 which is a tight sliding fit for a rivet 15 and a punch 16.

The die and anvil clamp the two panels together to form a workpiece. The clamping force can be due to upward pressure from the anvil or, as shown in Figure 2, downward pressure P by the die 13.

In this context a workpiece consists of any number of components which are intended to be riveted together.

The anvil incorporates an annular cavity which allows a fixed amount of deformation of the workpiece and also causes the rivet to splay outwards as will be described below.

Referring now in detail to the sequence shown in Figures 1 to 5, in Figure 2 a downward compressive force P is applied to the sheets by the die. Force F is then applied to the punch causing the rivet to pierce into the sheets and the end of the rivet to splay outwards by reacting against the anvil. At this stage there is sufficient volume of rivet left projecting above the top sheet to form the eventual rivet head.

In Figure 3, the die is withdrawn until the bottom of the die is level with the end of the punch. This leaves the remaining sides of the rivet projecting above the workpiece unsupported and unconstrained. The punch and die then move downwards in unison as shown in Figure 4 and upset the projecting end of the rivet to form a head. The head can be flush with the workpiece as shown or protruding depending on the design requirements.

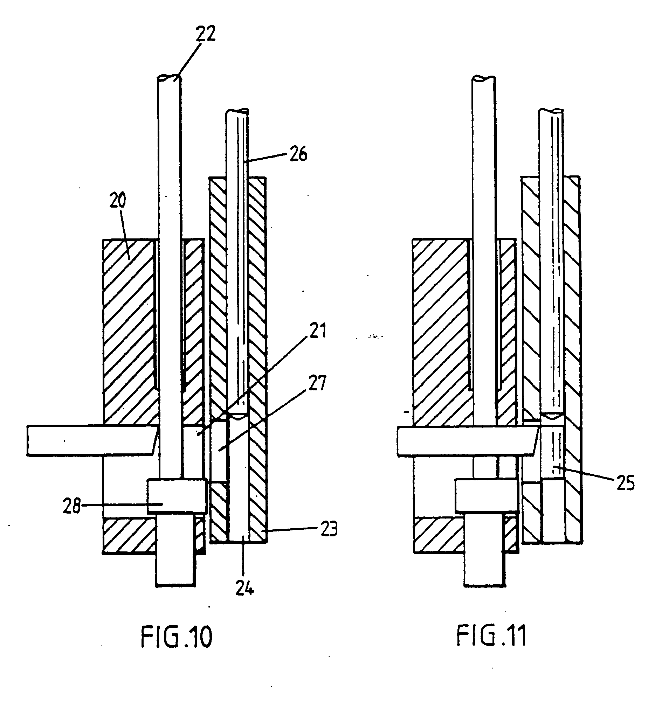

Certain aspects and advantages of this embodiment will immediately become apparent. Firstly, the rivets consist of straight-sided slugs of material. There is no need to pre-form a rivet head. In their simplest form the rivets can be formed by simply repeatedly cropping the end of a length of wire (see reference below to Figures 10 and 11). Secondly, the internal dimensions of the channel 14 in the die correspond substantially exactly to the external dimensions of the rivet. Since the die is manufactured from material of great strength it provides a constraint against the inevitable tendency to radially outward deformation of the rivet when force F is applied. It thus acts to strengthen the rivet and the resulting effect is as if a rivet of much stronger material were being used. It is thus possible to join components together using rivets made of the same basic material (e.g. aluminium alloy) as the component parts, but having a reduced strength differential over the component material.

This method works well providing the die is kept in contact with the workpiece at least during the part of the riveting processing when the rivet starts to enter and penetrate the workpiece. Once both workpieces have been penetrated then the constraint can be removed in order for a head to be formed. The simplest way to remove this constraint is to lift at least a portion of the die away from the workpiece. It will be appreciated that the die could be in two-part form with an outer, clamping component, which always remains in contact with the workpiece (not shown) and an inner component which moves as illustrated in these figures.

By using the arrangement described in the foregoing example, a workpiece or component material of aluminium alloy grade 5251 in the H3 condition having a hardness of Hv 85 can be satisfactorily riveted with a self piercing rivet manufactured from aluminium alloy grade 7050 having a hardness of Hv 150.

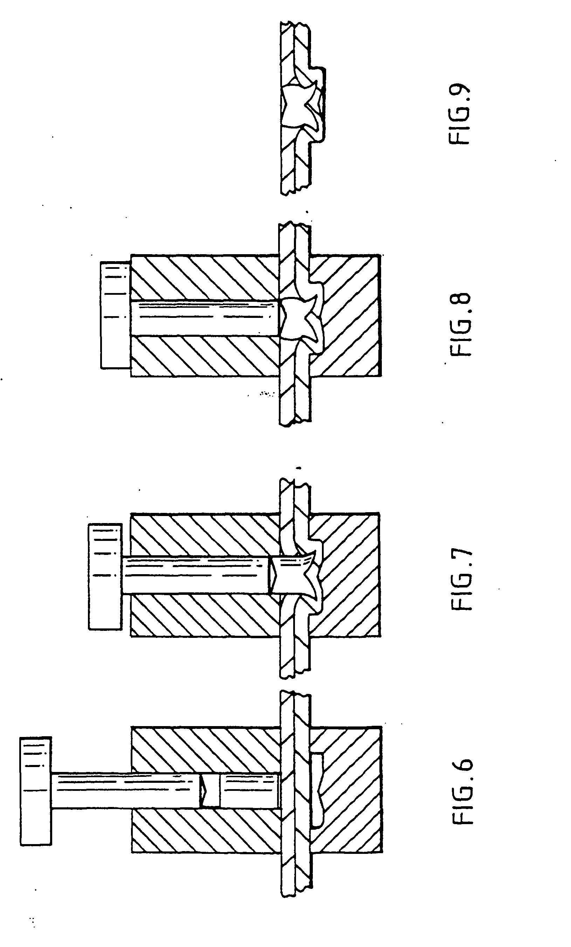

A further embodiment of this process is illustrated in Figures 6 to 9 inclusive. Figures 6 and 7 correspond to the steps shown in Figures 1 and 2. However, in Figure 8 the die is not withdrawn from the workpiece but instead continued pressure is applied by the punch 16. Continued forward movement of the punch causes expansion of the rivet sufficient for it to be securely engaged within the top panel. Where the rivet has comparable strength relative to the workpiece it has been discovered that the inevitable deformation takes place within the workpiece to form an embedded head rather than a countersunk head.

On many applications a sufficiently secure joint can be produced without the need for the rivet to have a fully formed head. This is particularly applicable where adhesives are the principal joining method and where a mechanical fixing is required to secure the component parts together until the adhesive is set.

Where a plain cylindrical rivet is used, the rivet can be produced at the riveting head by feeding wire into the head and cutting off the rivet by a cropping action and transferring the rivet into the die. This is illustrated in Figures 10 and 11.

A cutting block 20 is provided adjacent the rivet die 23 which contains an aperture 21 aligned with a corresponding aperture 27 in the die, enabling the rivet 25 to be fed directly into channel 24 as it is formed. Wire 22 is fed through the cutting block until it reaches a wire stop 28. The position of the wire stop in the cutting block is adjustable such that the length of the rivet can be adjusted to suit a variety of workpieces. This cropping technique is known per se but the sequential formation of rivets for feeding directly into an adjacent die has not previously been applied to this method. Whereas rivets in this type of apparatus and method are generally magazine or belt fed this embodiment avoids all the complexity of these earlier arrangements.

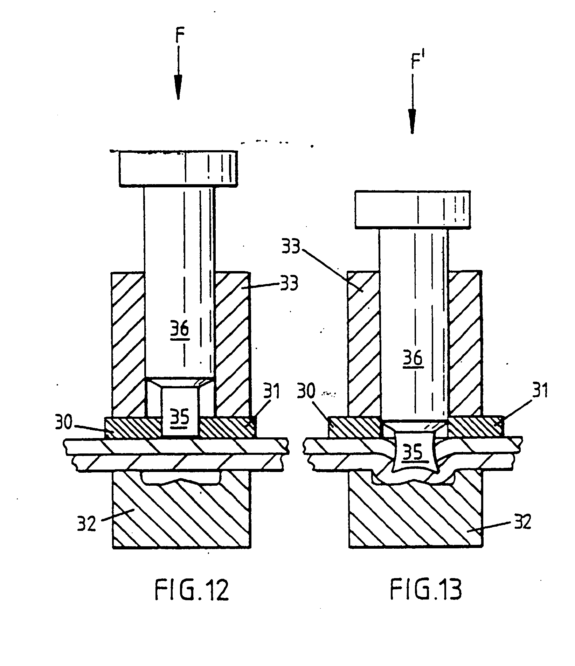

A third embodiment is illustrated in Figures 12 and 13. There are occasions when it is preferable to use a rivet with a pre-formed head. It has been discovered that it is possible to use such rivets in these methods providing the shank of the rivet is constrained as it enters the workpiece. This can be achieved using the method illustrated in Figures 12 and 13. Moveable heads 30, 31 are interposed between the die 33 and the workpiece. The heads are shaped so that they conform to the circumference of the rivet as a tight sliding fit. The rivet 35 is then driven into the workpiece until the head of the rivet encounters the moveable heads 30, 31. The heads are then withdrawn and force F' is applied to the punch 36 to drive the rivet head into the workpiece.

In this example the heads move laterally in the plane of the workpiece. However, this is only one option and the heads could equally well move in an angled manner. The important feature is that the end of the die is adjustable in terms of the width of the rivet to provide both the necessary constraint and passage for the head of the rivet. Force F' may or may not be equal to force F.

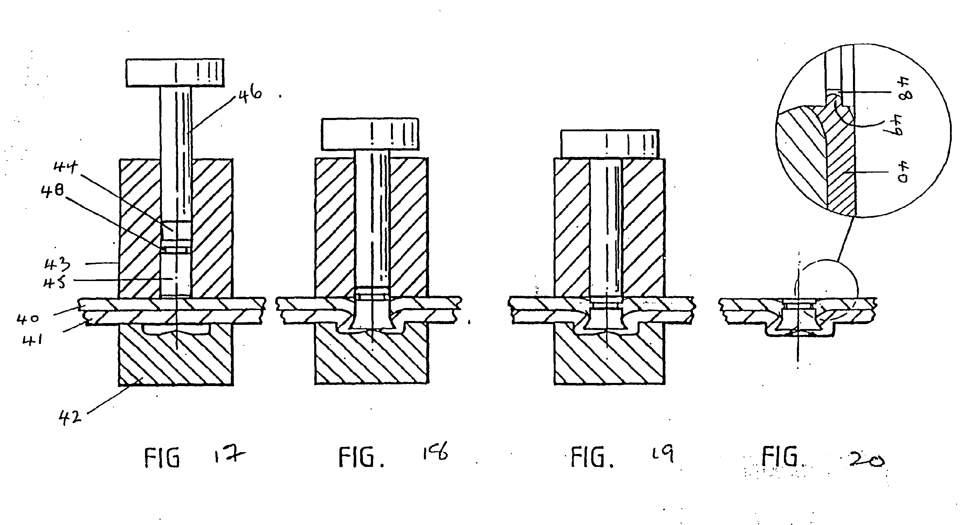

Figures 17 to 20 illustrate a further embodiment. In this embodiment the shaft of the rivet contains a circumferential groove 48 near the end of the rivet. The groove is preferably positioned such that it aligns with the sheet of material nearest to the die at the end of the riveting process. As the rivet is forced into the workpieces then material 49 from workpiece 40 is extruded into groove 48, griping the rivet tightly in place and thus forming a stronger joint between the two workpieces.

In Figures 17 to 20 the groove 48 is shown as a circumferential channel. However, this is only one possible arrangement. For example, the so-called groove could consist of one or more indentations around the circumference of the rivet, each indentation being capable of accepting extruded material 49. It follows that the term "groove" has a broad meaning in this context and includes a depression of any shape or configuration which can achieve the desired result of accommodating an extruded or exuded part of workpiece 40.

In this embodiment it will be noted that it is not necessary or desirable to withdraw the die away from workpiece 40 during the riveting process in a head-forming step. That is to say the step shown in Figure 3 is omitted. This encourages material from sheet 40 to flow into groove 48.

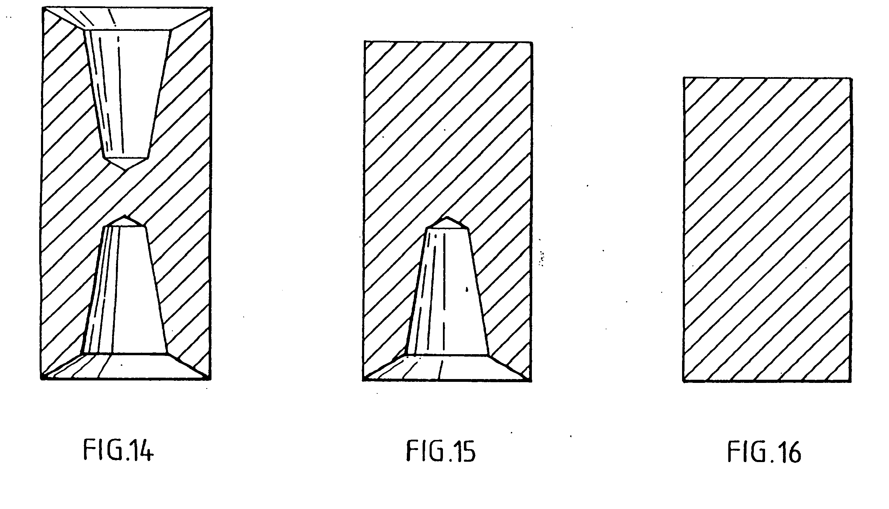

The examples so far described have utilised cylindrical slugs as rivets as shown in Figure 16. However the slug need not be circular cylindrical but could be any appropriate cross-section including square, rectangular or polygonal. Furthermore, the end of the rivet which pierces the workpiece can be semi-tubular in shape as shown in Figure 15. That is to say the end of the rivet can incorporate a bore with a tapered end to assist in the piercing of the workpiece and the ultimate deformation of the rivet on the anvil. Semi-tubular rivets provide easier penetration of sheets, improved splaying, and reduced distortion of the joint because there is less material displacement.

According to the present invention, both ends of the rivets contain a bore as shown in Figure 14. Symmetrical semi-tubular rivets eliminate the need to orientate the rivet during presentation to the riveting head.

These methods and apparatus are equally applicable to the application of tubular slugs or rivets (not illustrated). In this case a further punch designed to be a tight sliding fit within the bore of the rivet will be required to support the rivet against internal collapse. The bore of the rivet may be threaded to receive a fastener or plug to support for example an electrical wiring loom or a plastic insert to form a flush cover over the joint.

These methods are applicable to a wide variety of materials and enable rivets to be constructed from materials otherwise considered too weak to be useful. Thus as well as metals, plastics materials and composites can be used as selected by the materials specialist.

The skilled addressee of this specification is directed to the prior art specifications for general details on self-piercing riveting techniques. It will be appreciated that changes and modifications may be made to the embodiments described and illustrated without departing from the scope of the present invention defined in the following claims.

## Claims

1. A self-piercing axially symmetrical rivet comprising a rivet slug incorporating a bore with a tapered outer end at the end of the rivet intended to penetrate a workpiece, said tapered end forming a piercing region adapted to ease penetration of the rivet into workpieces, **characterised by** the other end of the rivet slug also incorporating a bore with a tapered outer end forming a piercing region adapted to ease penetration of the rivet into workpieces, thus obviating the need to orientate the rivet with respect to the workpiece prior to deformation.

2. A self-piercing rivet according to Claim 1 wherein at least one of the bores is internally threaded.

3. A self-piercing rivet as claimed in any of Claim 1 or Claim 2 inclusive wherein the rivet shank is substantially straight-sided, the sides of the shank being substantially parallel along substantially the entire length of the rivet.

4. A self-piercing rivet according to any of Claims 1 to 3 inclusive wherein the shaft of the rivet incorporates a groove (48).

5. A self-piercing rivet as claimed in Claim 4 wherein said groove comprises a substantially circumferential channel.

6. A self-piercing rivet as claimed in Claim 4 or 5 wherein the groove is positioned such that material from the workpiece nearest the end of the rivet is extruded into the groove during insertion of the rivet into the workpieces.

7. A self-piercing rivet as claimed in any of Claims 1 to 6 inclusive wherein the shaft of the rivet is axially polygonal in cross-section.

8. A self-piercing rivet as claimed in any of Claims 1 to 7 inclusive wherein the rivet shank is designed as a continuous tube.

9. A riveted joint between at least two workpieces formed by and thus comprising a self-piercing rivet according to any of Claims 1 to 8 inclusive.

10. A riveted joint as daimed in Claim 9 wherein the upper workpiece (10, 20, 40) is pierced by a self-piercing rivet as claimed in any of claims 1 to 8 inclusive and the bottom or lower most-in-use workpiece (11, 41) receives the piercing region of the rivet and wherein the piercing region is splayed radially outwards.

11. A self-piercing rivet according to Claim 1 or Claim 2, wherein said tapered ends extend to the outer surface of the slug making a vertex therewith with an angle of less than 90 degrees to form the piercing region.

## Patentansprüche

1. Achssymmetrischer Stanzniet, der einen Nietbolzen umfasst, der eine Bohrung mit einem verjüngten Außenende an dem zum Durchdringen eines Werkstücks vorgesehenen Ende des Niets umfasst, wobei das verjüngte Ende einen Stanzbereich formt, dafür eingerichtet, ein Eindringen des Niets in ein Werkstück zu erleichtern, **dadurch gekennzeichnet, dass** das andere Ende des Nietbolzens ebenfalls eine Bohrung mit einem verjüngten Außenende umfasst, das einen Stanzbereich formt, dafür eingerichtet, ein Eindringen des Niets in ein Werkstück zu erleichtern, und so die Notwendigkeit erübrigt, den Niet vor dem Verformen in Bezug auf das Werkstück auszurichten.

2. Stanzniet nach Anspruch 1, wobei wenigstens eine der Bohrungen mit einem Innengewinde versehen ist.

3. Stanzniet nach einem der Ansprüche 1 bis einschließlich 2, wobei der Nietschaft wesentlich geradseitig ist, wobei die Seiten des Schafts längs wesentlich der gesamten Länge des Niets wesentlich parallel sind.

4. Stanzniet nach einem der Ansprüche 1 bis einschließlich 3, wobei der Schaft des Niets eine Rille (48) einschließt.

5. Stanzniet nach Anspruch 4, wobei die Rille einen wesentlich umlaufenden Kanal umfasst.

6. Stanzniet nach Anspruch 4 oder 5, wobei die Rille derart angeordnet ist, dass Material aus dem Werkstück nächst dem Ende des Niets während des Einsetzens des Niets in die werkstücke in die Rille extrudiert wird.

7. Stanzniet nach einem der Ansprüche 1 bis einschließlich 6, wobei der Schaft des Niets im Querschnitt achspolygonal ist.

8. Stanzniet nach einem der Ansprüche 1 bis einschließlich 7, wobei der Nietschaft als durchgehende Röhre gestaltet ist.

9. Genietete Verbindung zwischen wenigstens zwei Werkstücken, geformt durch und folglich umfassend einen Stanzniet nach einem der Ansprüche 1 bis einschließlich 8.

10. Genietete Verbindung nach Anspruch 9, wobei das obere Werkstück (10, 20, 40) durch einen Stanzniet nach einem der Ansprüche 1 bis einschließlich 8 durchgestanzt wird und das unterste oder untere am meisten verwendete Werkstück (11, 41) den Stanzbereich des Niets aufnimmt und wobei der Stanzbereich in Radialrichtung nach außen ausgeschrägt wird.

11. Stanzniet nach Anspruch 1 oder Anspruch 2, wobei sich die verjüngten Enden zur Außenfläche des Bolzens erstrecken und mit demselben einen Scheitel mit einem Winkel von weniger als 90 Grad herstellen, um den Stanzbereich zu formen.

## Revendications

1. Rivet autoperforant axialement symétrique, comprenant un goujon de rivet incorporant un alésage avec une extrémité externe effilée au niveau de l'extrémité du rivet, destinée à pénétrer dans une pièce de fabrication, ladite extrémité effilée formant une région à perforation destinée à faciliter la pénétration du rivet dans la pièce de fabrication, **caractérisé en ce que** l'autre extrémité du goujon de rivet incorpore également un alésage avec une extrémité externe effilée, formant une région à perforation destinée à faciliter la pénétration du rivet dans les pièces de fabrication, supprimant ainsi la nécessité d'orienter le rivet par rapport à la pièce de fabrication avant la déformation.

2. Rivet autoperforant selon la revendication 1, dans lequel au moins un des alésages comporte un filetage interne.

3. Rivet autoperforant selon l'une quelconque des revendications 1 ou 2 incluse, dans lequel la tige du rivet comporte des côtés pratiquement droits, les côtés de la tige étant pratiquement parallèles le long, pratiquement, de l'ensemble de la longueur du rivet.

4. Rivet autoperforant selon l'une quelconque des revendications 1 à 3 incluse, dans lequel l'arbre du rivet incorpore une rainure (48).

5. Rivet autoperforant selon la revendication 4, dans lequel ladite rainure comprend un canal pratiquement circonférentiel.

6. Rivet autoperforant selon les revendications 4 ou 5, dans lequel la rainure est positionnée de sorte que le matériau de la pièce de fabrication le plus proche de l'extrémité du rivet est extrudé dans la rainure au cours de l'insertion du rivet dans les pièces de fabrication.

7. Rivet autoperforant selon l'une quelconque des revendications 1 à 6 incluse, dans lequel l'arbre du rivet est axialement polygonal en section transversale.

8. Rivet autoperforant selon l'une quelconque des revendications 1 à 7 incluse, dans lequel la tige du rivet a la forme d'un tube continu.

9. Joint riveté entre au moins deux pièces de fabrication, formé par un rivet autoperforant selon l'une quelconque des revendications 1 à 8 incluse, et comprenant ainsi un tel rivet.

10. Joint riveté selon la revendication 9, dans lequel la pièce de fabrication supérieure (10, 20, 40) est perforée par le rivet autoperforant selon l'une quelconque des revendications 1 à 8 incluse, et la pièce de fabrication du bas ou la pièce de fabrication inférieure la plus utilisée (11, 41) reçoit la région à perforation du rivet, et dans lequel la région à perforation est évasée radialement vers l'extérieur.

11. Rivet autoperforant selon les revendications 1 ou 2, dans lequel lesdites extrémités effilées s'étendent vers la surface externe du goujon, établissant un sommet avec celui-ci, avec un angle de moins de 90 degrés, pour former la région à perforation.
